# EUROPEAN PATENT APPLICATION

(11) **EP 4 818 945 A1**
(43) Date of publication of application: **07.10.2026**
(21) Application number: 24895966.0
(22) Date of filing: 26.09.2024
(51) Int. Cl.: G06F 21/57

(54) **SECURITY POLICY UPDATING METHOD AND APPARATUS, EMBEDDED DEVICE, AND MEDIUM**

(30) Priority: 30.11.2023 CN 202311630956
(71) Applicant: Rolling Wireless S.À R.L., 2540 Luxembourg (LU)
(72) Inventor: ZENG, Qingquan, Shenzhen, Guangdong 518055 (CN)
(74) Representative: Plasseraud IP
(86) International application number: PCT/CN2024/121405
(87) International publication number: WO 2025/112870

(57) **Abstract**

Disclosed are a security policy updating method and apparatus, an embedded device, and a medium. The security policy updating method includes: outputting a random string as an encryption seed based on a first preset interface function of firmware of the embedded device; and receiving an encrypted security policy based on a second preset interface function of the firmware of the embedded device, decrypting the encrypted security policy to obtain a decrypted security policy, and enabling the decrypted security policy; the encrypted security policy being obtained by encrypting an updated security policy based on the encryption seed.

## Description

### Cross-Reference To Related Applications

The present disclosure claims all the benefits of the Chinese patent application No. 202311630956.5, filed on November 30, 2023 before the China National Intellectual Property Administration of the People's Republic of China, entitled "Security Policy Updating Method and Apparatus, Embedded Device, and Medium", the entire contents of which are incorporated herein by reference.

### Field

The present disclosure generally relates to the technical field of security policy updating, more particularly to a security policy updating method and apparatus, an embedded device, and a medium.

### Background

At present, the embedded device widely adopts a fuse (i.e., fuse register) as a security scheme. The security scheme requires a root certificate, and a signature of the root certificate is burned into the fuse of a chip of the embedded device. The root certificate serves as a certificate chain, or the certificate chain is jointly formed by the root certificate and further levels of certificates derived from the root certificate according to needs, and the certificate chain is attached to firmware of the embedded device. A security policy is included in the certificate chain, and is used for enabling or prohibiting functions such as secure boot, partition image export, RAM (Random Access Memory) DUMP, JTAG (Joint Test Action Group), and debug logs. Once the security scheme based on the fuse is activated, after start-up of the embedded device, the root certificate signature in the fuse is read and verified against the certificate chain attached to the firmware; if the verification passes, the security policy in the certificate chain is read, and the security policy is applied to an entire process of the start-up and an operation of the embedded device; and if the verification fails, the start-up of the embedded device is prohibited.

Typically, after deployment is completed, the security policy in the certificate chain in the firmware of the embedded device closes all debugging functions, that is, the secure boot is enabled, while functions such as image export, RAM DUMP, JTAG, and print log are prohibited. At this time, if a certain debugging function is required for a certain purpose, a firmware carrying a different certificate chain needs to be re-downloaded to update the security policy. However, updating the firmware inevitably brings a risk of damage to the embedded device caused by a failure in updating the firmware.

### Summary

In a first aspect, the present disclosure provides a security policy updating method applied to an embedded device, which includes:
outputting a random string as an encryption seed based on a first preset interface function of firmware of the embedded device; and
receiving an encrypted security policy based on a second preset interface function of the firmware of the embedded device, decrypting the encrypted security policy to obtain a decrypted security policy, and enabling the decrypted security policy; the encrypted security policy being obtained by encrypting an updated security policy based on the encryption seed.

In some examples, after said decrypting the encrypted security policy to obtain a decrypted security policy, the security policy updating method further includes:
determining a storage location of the decrypted security policy based on configuration information of the decrypted security policy, the storage location being a random access memory or a non-volatile memory; and
storing the decrypted security policy according to the storage location.

In some examples, before said receiving an encrypted security policy based on a second preset interface function of the firmware of the embedded device, the security policy updating method further includes:
when the embedded device is powered on, performing legitimacy verification on a certificate chain in the firmware based on a signature of a root certificate obtained from a fuse register; and
if the verification passes and a historical decrypted security policy is stored in the non-volatile memory, enabling the historical decrypted security policy to complete start-up;
if the verification passes and no historical decrypted security policy is stored in the non-volatile memory, enabling the security policy in the certificate chain to complete start-up.

In some examples, the configuration information further carries a deletion policy of the decrypted security policy; the deletion policy is a timed deletion or a deletion after a preset number of restarts; and
the security policy updating method further includes: deleting the decrypted security policy based on the deletion policy.

In some examples, after said outputting a random string as an encryption seed based on a first preset interface function of firmware of the embedded device, the security policy updating method further includes:
setting expiration time of the encryption seed.

In some examples, the encrypted security policy is obtained by encrypting the updated security policy based on the encryption seed and an encryption private key, and said decrypting the encrypted security policy to obtain a decrypted security policy includes:
decrypting the encrypted security policy based on a locally stored public key and the encryption seed to obtain a decrypted security policy.

In some examples, said outputting a random string as an encryption seed based on a first preset interface function of firmware of the embedded device includes:
when an instruction sent by a security policy server is obtained, outputting the random string as the encryption seed based on the first preset interface function of the firmware of the embedded device, and uploading the encryption seed to the security policy server; and
said receiving an encrypted security policy based on a second preset interface function of the firmware of the embedded device includes: receiving the encrypted security policy returned by the security policy server based on the second preset interface function of the firmware of the embedded device.

In a second aspect, the present disclosure discloses a security policy updating method applied to a security policy server, which includes:
obtaining an encryption seed, the encryption seed being a random string output by a first preset interface function, the first preset interface function being an interface function of firmware of an embedded device; and
encrypting an updated security policy based on the encryption seed to obtain an encrypted security policy, wherein the encrypted security policy is received by a second preset interface function of the firmware and decrypted to obtain a decrypted security policy, and the decrypted security policy is enabled in the embedded device.

In a third aspect, the present disclosure discloses a security policy updating apparatus applied to an embedded device, which includes:
an encryption seed outputting module configured to output a random string as an encryption seed based on a first preset interface function of firmware of the embedded device; and
a security policy processing module configured to receive an encrypted security policy based on a second preset interface function of the firmware of the embedded device, decrypt the encrypted security policy to obtain a decrypted security policy, and enable the decrypted security policy; the encrypted security policy being obtained by encrypting an updated security policy based on the encryption seed.

In a fourth aspect, the present disclosure discloses an embedded device including a memory and a processor, wherein
the memory is configured to save a computer program; and
the processor is configured to execute the computer program to implement the security policy updating method according to the present disclosure.

In a fifth aspect, the present disclosure discloses a computer-readable storage medium configured to save a computer program, wherein the computer program implements the security policy updating method according to the present disclosure when executed by a processor.

In some examples, through the preset interface function of the firmware of the embedded device, the random string is output as the encryption seed, the encrypted security policy is received, the encrypted security policy is decrypted to obtain the decrypted security policy, and the decrypted security policy is enabled; in this way, updating of the security policy is implemented through the interface function of the firmware, which can effectively avoid a device damage caused by firmware updating, and improve security of the security policy updating.

### Brief Description of the Drawings

In order to more clearly describe the technical solutions of embodiments of the present disclosure, the accompanying drawings that are required to be used in the embodiments are briefly described below. Apparently, the drawings in the following description merely show embodiments of the present disclosure, and for those of ordinary skill in the art, other related drawings can be obtained according to these drawings without making inventive efforts.
FIG. 1 is a flow chart of a security policy updating method according to an embodiment of the present disclosure;
FIG. 2 is a schematic diagram of a security policy updating scheme according to an embodiment of the present disclosure;
FIG. 3 is a flow chart of starting up an embedded device according to an embodiment of the present disclosure;
FIG. 4 is a schematic structural diagram of a security policy updating apparatus according to an embodiment of the present disclosure; and
FIG. 5 is a structural diagram of an embedded device according to an embodiment of the present disclosure.

### Detailed Description

The technical solutions in the embodiments of the disclosure will be clearly and fully described below in combination with the accompanying drawings in the embodiments of the disclosure. Obviously, the embodiments to be described are part of embodiments but not all embodiments of the disclosure. Based on the embodiments in the disclosure, all other embodiments obtained by those skilled in the art without inventive work shall fall within the scope of the disclosure.

Typically, the security policy in the certificate chain in the firmware of the finally deployed embedded device closes all debugging functions, that is, the secure boot is enabled, while functions such as image export, RAM DUMP, JTAG, and print log are prohibited. At this time, if a certain debugging function is required for a certain purpose, a firmware carrying a different certificate chain needs to be re-downloaded to update the security policy. However, updating the firmware inevitably brings a risk of damage to the embedded device caused by a failure in updating the firmware. Moreover, a function opened by a method of updating firmware is always enabled, and will not be closed due to a power loss or a restart, unless the firmware is updated again to close the function. Therefore, if the firmware is not updated again in time to close a certain debugging function, there is a risk of information leakage. Therefore, the present disclosure provides a scheme of security policy updating, which may improve security and flexibility of the security policy updating.

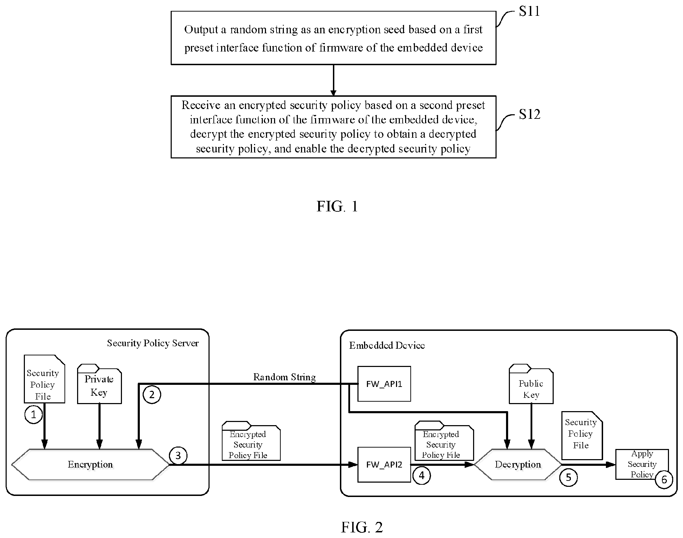

Referring to FIG. 1, an embodiment of the present disclosure discloses a security policy updating method applied to an embedded device, which includes:
Step S11: outputting a random string as an encryption seed based on a first preset interface function of firmware of the embedded device; and
Step S12: receiving an encrypted security policy based on a second preset interface function of the firmware of the embedded device, decrypting the encrypted security policy to obtain a decrypted security policy, and enabling the decrypted security policy; the encrypted security policy being obtained by encrypting an updated security policy based on the encryption seed.

In some examples, the first preset interface function and the second preset interface function are implemented in the firmware of the embedded device, and it can be understood that the first preset interface function and the second preset interface function are both APIs (Application Programming Interfaces). In some examples, when an instruction sent by a security policy server is obtained, the random string is output as the encryption seed based on the first preset interface function of the firmware of the embedded device. In some examples, if a preset user operation is detected, the random string is output as the encryption seed based on the first preset interface function of the firmware of the embedded device. That is, a user may operate the embedded device, and the embedded device outputs the random string as the encryption seed based on the first preset interface function of the firmware of the embedded device. In some examples, when an instruction sent by a user terminal device is received, the random string is output as the encryption seed based on the first preset interface function of the firmware of the embedded device.

In some examples, an expiration time of the encryption seed may be further set. It should be pointed out that encrypting the security policy requires using the encryption seed generated in the embedded device, and by setting the expiration time of the encryption seed, the encrypted security policy can be applied to the specific embedded device only within a specific time period, thereby ensuring security of application of the security policy.

In some examples, the firmware of the embedded device provides the second preset interface function used for receiving the encrypted security policy, decrypting the encrypted security policy to obtain the decrypted security policy, and enabling the decrypted security policy. Specifically, the encrypted security policy is obtained by encrypting the updated security policy based on the encryption seed and an encryption private key. In some examples, the encrypted security policy may be decrypted based on a locally stored public key and the encryption seed to obtain the decrypted security policy.

In some examples, after outputting the random string as the encryption seed based on the first preset interface function of the firmware of the embedded device, the embedded device may further upload the encryption seed to the security policy server. In some examples, the encrypted security policy is obtained by the security policy server encrypting the updated security policy based on the encryption seed and the encryption private key, and the encrypted security policy returned by the security policy server may be received based on the second preset interface function of the firmware of the embedded device in the embodiment of the present disclosure. The encryption private key may be stored in the security policy server. The security policy in the security policy server may be uploaded by the user terminal device, and the user terminal device may be a personal computer, a mobile terminal, or the like. When the updated security policy exists, the user terminal device uploads the updated security policy to the security policy server. In this way, the private key for encryption is stored on the security policy server, and the public key for decryption is stored on the embedded device, thereby ensuring that only the security policy server having a legitimate private key can update the security policy.

In some examples, after decrypting the encrypted security policy to obtain the decrypted security policy, a storage location of the decrypted security policy is further determined based on configuration information of the decrypted security policy; the storage location being a random access memory or a non-volatile memory; and the decrypted security policy is stored according to the storage location. Moreover, the configuration information may further carry a deletion policy of the decrypted security policy; the deletion policy is a timed deletion or a deletion after a preset number of restarts; and correspondingly, the decrypted security policy may be deleted based on the deletion policy. It can be understood that in the embodiment of the present disclosure, a period of applying the security policy can be flexibly configured with the configuration information of the security policy. In some examples, the security policy is stored in the RAM of the embedded device through the configuration information requirement to implement invalidity upon power loss; or the security policy is encrypted and securely stored in the non-volatile memory of the embedded device through the configuration information to implement long-term validity until the user deletes the security policy through a firmware API; or the security policy in the RAM and the non-volatile memory may be automatically deleted after a limited number of restarts or a limited duration is configured, to implement an automatic recovery of the security policy. It should be noted that a function opened by a method of updating firmware in the related art is always enabled, and will not be closed due to a power loss or a restart, unless the firmware is updated again to close the function. Therefore, if the firmware is not updated again in time to close a certain debugging function, there is a risk of information leakage. The scheme provided by the embodiment of the present disclosure can flexibly perform a policy configuration, implement the automatic recovery of the security policy without updating the security policy again, and close a corresponding debugging function in time, avoiding information leakage and being more flexible.

In some examples, when the embedded device is powered on, legitimacy verification is performed on a certificate chain in the firmware based on a signature of a root certificate obtained from a fuse register, and if the verification fails, a normal start-up process is ended, and exception handling is entered; and if the verification passes, and a historical decrypted security policy is stored in the non-volatile memory, the historical decrypted security policy is enabled to complete start-up; and if the verification passes, and no historical decrypted security policy is stored in the non-volatile memory, the security policy in the certificate chain is enabled to complete start-up; after the start-up is completed, the first preset interface function and the second preset interface function start providing a service; and when the encrypted security policy is received based on the second preset interface function of the firmware of the embedded device, the encrypted security policy is decrypted to obtain the decrypted security policy, and the decrypted security policy is enabled; specifically, the encrypted security policy is obtained by encrypting the updated security policy based on the encryption seed output by the first preset interface.

It can be seen that the embodiment of the present disclosure includes: outputting a random string as an encryption seed based on a first preset interface function of firmware of the embedded device; and receiving an encrypted security policy based on a second preset interface function of the firmware of the embedded device, decrypting the encrypted security policy to obtain a decrypted security policy, and enabling the decrypted security policy; the encrypted security policy being obtained by encrypting an updated security policy based on the encryption seed. That is, in the embodiment of the present disclosure, through the preset interface function of the firmware of the embedded device, the random string is output as the encryption seed, the encrypted security policy is received, the encrypted security policy is decrypted to obtain the decrypted security policy, and the decrypted security policy is enabled; in this way, updating of the security policy is implemented through the interface function of the firmware, which can effectively avoid a device damage caused by firmware updating; and the automatic recovery of the policy is implemented by configuring the deletion policy or writing to the random access memory, which avoids the risk of information security leakage caused by a failure to update the firmware again in time, and improves security and flexibility of the security policy updating.

Referring to FIG. 2, FIG. 2 is a schematic diagram of a security policy updating scheme provided by an embodiment of the present disclosure. The scheme is jointly completed by two entities: the security policy server and the embedded device. The security policy server encrypts a security policy file and provides a private key and an encryption algorithm required for encrypting the security policy file. The embedded device provides the encryption seed required for encrypting the policy file, a public key required for decrypting the security policy file, and a decryption algorithm. The firmware of the embedded device provides two APIs, one API outputs a random string as the encryption seed and is recorded as FW_API1; and the other API receives the encrypted security policy file, and decrypts and applies the policy file, and is recorded as FW_API2. Specific implementation steps can include:
(1) The user edits the security policy file through the user terminal device, and uploads the updated security policy file to the security policy server. (2) The user operates the embedded device, and obtains a random string as the encryption seed through FW_API1. (3) The security policy server takes the security policy file generated in step (1), the encryption seed generated in step (2), and the locally stored private key as an input of the encryption algorithm, and generates the encrypted security policy file. (4) The user inputs the encrypted security policy file generated in step (3) into the embedded device through FW_API2, or the security policy server directly sends the encrypted security policy file to the embedded device. (5) The embedded device takes the locally stored public key, the encryption seed generated in step (2), and the encrypted security policy file provided in step (4) as an input of a decryption module which is the security policy file generated in step (1). (6) The embedded device parses and applies the security policy file obtained in step (5). The period of applying the security policy can be flexibly configured according to the configuration in the policy file. For example, the policy file is stored in the RAM of the embedded device through the configuration requirement to implement invalidity upon power loss; or the policy file is encrypted and securely stored in the non-volatile memory of the embedded device through a policy configuration to implement the long-term validity until the user deletes the policy file through the firmware API; or the security policy file in the RAM and the non-volatile memory may be automatically deleted after the limited number of restarts or the limited duration is configured, to implement the automatic recovery of the security policy.

In the present disclosure, updating of the security policy file is not implemented through a conventional firmware updating manner, but is implemented with the API provided by the firmware. The encryption seed is generated on the embedded device side as an input for the security policy server to encrypt the security policy file. Moreover, the private key for encrypting the policy file is stored on the security policy server, and the public key for decryption is stored on the embedded device. In this way, since the updating of the security policy file is not implemented through the conventional firmware updating manner, but is implemented with the API provided by the firmware, which avoids a risk of damage to the device caused by failure of the firmware updating, and a risk that the security policy cannot be changed before the firmware is updated again. encrypting the security policy requires using the encryption seed generated in the embedded device, and by setting the expiration time of the encryption seed, the encrypted security policy can be applied to the specific embedded device only within a specific time period, thereby ensuring security of application of the security policy. Moreover, encrypting the security policy requires using the encryption seed generated in the embedded device, which may cause the encrypted security policy to be applied to the specific embedded device only within a specific time period, thereby ensuring security of application of the security policy. In addition, the private key for encryption is stored on the security policy server, and the public key for decryption is stored on the embedded device, thereby ensuring that only the security policy server having a legitimate private key can update the security policy.

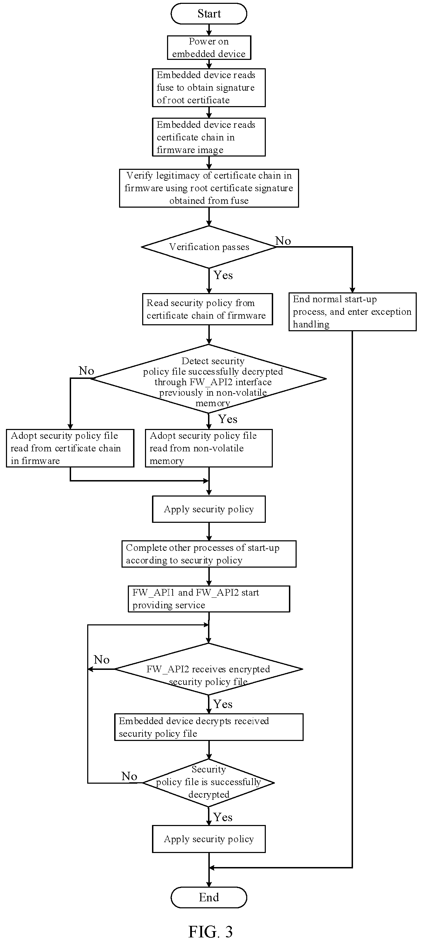

Referring to FIG. 3, FIG. 3 is a flow chart of starting up an embedded device according to an embodiment of the present disclosure. After the security policy updating method provided by the present disclosure is adopted, under a condition that a security scheme based on a fuse is activated, a start-up process of the embedded device is shown in FIG. 3. When the embedded device is powered on, the embedded device reads the fuse to obtain the signature of the root certificate, the embedded device reads the certificate chain in the firmware, and uses the signature of the root certificate obtained from the fuse to perform the legitimacy verification on the certificate chain in the firmware; if the verification passes, the security policy is read from the certificate chain of a firmware image; and if the verification fails, the normal start-up process is ended, and the exception handling is entered. It is determined whether the security policy file successfully decrypted through an FW_API2 interface previously is detected in the non-volatile memory; if there is no security policy file successfully decrypted through the FW_API2 interface previously, the security policy file read from the certificate chain of the firmware image is adopted; if there is the security policy file successfully decrypted through the FW_API2 interface previously, the security policy file read from the non-volatile memory is adopted. The security policy is applied, and other processes of the start-up are completed according to the security policy; FW_API1 and FW_API2 start providing the service; if FW_API2 receives the encrypted security policy file, the embedded device decrypts the received security policy file; and if the security policy file is successfully decrypted, the successfully decrypted security policy is applied.

An embodiment of the present disclosure discloses a security policy updating method applied to a security policy server, which includes:
obtaining an encryption seed, the encryption seed being a random string output by a first preset interface function, the first preset interface function being an interface function of firmware of an embedded device; and
encrypting an updated security policy based on the encryption seed to obtain an encrypted security policy, wherein the encrypted security policy is received by a second preset interface function of the firmware and decrypted to obtain a decrypted security policy, and the decrypted security policy is enabled in the embedded device.

In some examples, said encrypting an updated security policy based on the encryption seed to obtain an encrypted security policy includes: encrypting the updated security policy based on the encryption seed and a locally stored private key and by calling a preset encryption algorithm, to obtain an encrypted security policy.

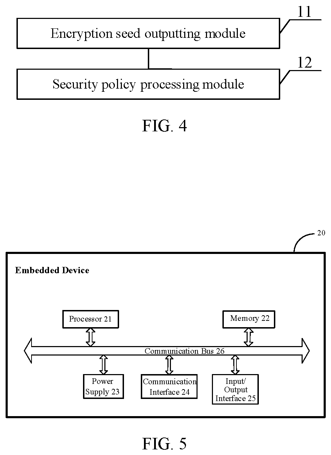

Referring to FIG. 4, FIG. 4 is a security policy updating apparatus disclosed by an embodiment of the present disclosure, which is applied to an embedded device and includes:
an encryption seed outputting module 11 configured to output a random string as an encryption seed based on a first preset interface function of firmware of the embedded device; and
a security policy processing module 12 configured to receive an encrypted security policy based on a second preset interface function of the firmware of the embedded device, decrypt the encrypted security policy to obtain a decrypted security policy, and enable the decrypted security policy; the encrypted security policy being obtained by encrypting an updated security policy based on the encryption seed.

The embodiment of the present disclosure includes: outputting a random string as an encryption seed based on a first preset interface function of firmware of the embedded device; and receiving an encrypted security policy based on a second preset interface function of the firmware of the embedded device, decrypting the encrypted security policy to obtain a decrypted security policy, and enabling the decrypted security policy; the encrypted security policy being obtained by encrypting an updated security policy based on the encryption seed. That is, in the embodiment of the present disclosure, through the preset interface function of the firmware of the embedded device, the random string is output as the encryption seed, the encrypted security policy is received, the encrypted security policy is decrypted to obtain the decrypted security policy, and the decrypted security policy is enabled; in this way, updating of the security policy is implemented through the interface function of the firmware, which can effectively avoid a device damage caused by firmware updating, and improve security of the security policy updating.

In some examples, the security policy processing module 12 further includes a security policy storage sub-module configured to, after decrypting the encrypted security policy to obtain the decrypted security policy, determine a storage location of the decrypted security policy based on configuration information of the decrypted security policy, the storage location being a random access memory or a non-volatile memory; and store the decrypted security policy according to the storage location.

In some examples, the security policy updating apparatus further includes: a starting processing module configured to, when the embedded device is powered on, perform legitimacy verification on a certificate chain in the firmware based on a signature of a root certificate obtained from a fuse register; and if the verification passes and a historical decrypted security policy is stored in the non-volatile memory, the historical decrypted security policy is enabled to complete start-up; if the verification passes and no historical decrypted security policy is stored in the non-volatile memory, the security policy in the certificate chain is enabled to complete start-up.

In some examples, the configuration information further carries a deletion policy of the decrypted security policy; the deletion policy is a timed deletion or a deletion after a preset number of restarts; and the security policy updating apparatus further includes a policy deletion module configured to delete the decrypted security policy based on the deletion policy.

In some examples, the security policy updating apparatus further includes an expiration time setting module configured to, when the encryption seed outputting module 11 outputs the random string as the encryption seed based on the first preset interface function of the firmware of the embedded device, set expiration time of the encryption seed.

In some examples, the encrypted security policy is obtained by encrypting the updated security policy based on the encryption seed and an encryption private key, and the security policy processing module 12 is configured to decrypt the encrypted security policy based on a locally stored public key and the encryption seed to obtain the decrypted security policy.

In some examples, the encryption seed outputting module 11 is configured to, when an instruction sent by a security policy server is obtained, output the random string as the encryption seed based on the first preset interface function of the firmware of the embedded device, and upload the encryption seed to the security policy server; and the security policy processing module 12 is configured to receive the encrypted security policy returned by the security policy server based on the second preset interface function of the firmware of the embedded device.

Referring to FIG. 5, an embodiment of the present disclosure discloses an embedded device 20 which includes a processor 21 and a memory 22, wherein the memory 22 is configured to save a computer program; and the processor 21 is configured to execute the computer program to implement the security policy updating method according to the present disclosure.

The process of the security policy updating method may refer to the contents disclosed in the above embodiment, which will not be repeated here.

In some examples, as a carrier for storing resources, the memory 22 may be a read-only memory, a random access memory, a magnetic disk, an optical disc, or the like, and a storage manner thereof may be temporary storage or permanent storage.

In some examples, the embedded device 20 further includes a power supply 23, a communication interface 24, an input/output interface 25, and a communication bus 26. The power supply 23 is configured to provide an operating voltage for each hardware device on the electronic device 20; the communication interface 24 can create a data transmission channel between the electronic device 20 and an external device, and a communication protocol complied with by the communication interface 24 is any communication protocol capable of being applied to the technical scheme of the present disclosure, which is not specifically limited herein; and the input/output interface 25 is configured to obtain external input data or output data to the external, and a specific interface type thereof can be selected according to specific application needs, which is not specifically limited herein.

An embodiment of the present disclosure further discloses a computer-readable storage medium configured to save a computer program, wherein the computer program implements the security policy updating method according to the present disclosure when executed by a processor.

The process of the security policy updating method may refer to the contents disclosed in the above embodiment, which will not be repeated here.

The embodiments in the description are described in a progressive manner, each embodiment focuses on a difference from other embodiments, and reference may be made to the same or similar parts among the embodiments. Since the device disclosed in the embodiment corresponds to the method disclosed in the embodiments, the description thereof is simple, and the relevant parts can refer to the description of the method.

The steps of the methods or algorithms described in the embodiments disclosed herein may be implemented in hardware, a processor-executed software module, or a combination of both. The software module may be placed in a random access memory (RAM), memory, read-only memory (ROM), electrically programmable ROM, electrically erasable programmable ROM, register, hard disk, removable magnetic disk, or CD-ROM, or any other forms of storage media known in the field.

The foregoing describes the security policy updating method and apparatus, the embedded device, and the medium provided by the disclosure in detail. The principle and embodiments of the present disclosure are described herein using specific examples, and the description of the above embodiments is only used to help understand the method of the present disclosure and the core idea thereof. Meanwhile, a person of ordinary skill in the art may make modifications to the detailed description and application scope according to the idea of the present disclosure. In conclusion, the contents of the description shall not be construed as a limitation on the present disclosure.

## Claims

1. A security policy updating method applied to an embedded device, comprising:
outputting a random string as an encryption seed based on a first preset interface function of firmware of the embedded device; and
receiving an encrypted security policy based on a second preset interface function of the firmware of the embedded device, decrypting the encrypted security policy to obtain a decrypted security policy, and enabling the decrypted security policy, the encrypted security policy being obtained by encrypting an updated security policy based on the encryption seed.

2. The security policy updating method according to claim 1, after said decrypting the encrypted security policy to obtain a decrypted security policy, further comprising:
determining a storage location of the decrypted security policy based on configuration information of the decrypted security policy, the storage location being a random access memory or a non-volatile memory; and
storing the decrypted security policy according to the storage location.

3. The security policy updating method according to claim 1 or 2, before said receiving an encrypted security policy based on a second preset interface function of the firmware of the embedded device, further comprising:
when the embedded device is powered on, performing legitimacy verification on a certificate chain in the firmware based on a signature of a root certificate obtained from a fuse register; and
if the verification passes and a historical decrypted security policy is stored in the non-volatile memory, enabling the historical decrypted security policy to complete start-up;
if the verification passes and no historical decrypted security policy is stored in the non-volatile memory, enabling the security policy in the certificate chain to complete start-up.

4. The security policy updating method according to any one of claims 1 to 3, wherein the configuration information further carries a deletion policy of the decrypted security policy; the deletion policy is a timed deletion or a deletion after a preset number of restarts; and
the security policy updating method further comprises: deleting the decrypted security policy based on the deletion policy.

5. The security policy updating method according to any one of claims 1 to 4, wherein the encrypted security policy is obtained by encrypting the updated security policy based on the encryption seed and an encryption private key, and said decrypting the encrypted security policy to obtain a decrypted security policy comprises:
decrypting the encrypted security policy based on a locally stored public key and the encryption seed to obtain a decrypted security policy.

6. The security policy updating method according to any one of claims 1 to 5, wherein said outputting a random string as an encryption seed based on a first preset interface function of firmware of the embedded device comprises:
when an instruction sent by a security policy server is obtained, outputting the random string as the encryption seed based on the first preset interface function of the firmware of the embedded device, and uploading the encryption seed to the security policy server; and
said receiving an encrypted security policy based on a second preset interface function of the firmware of the embedded device comprises: receiving the encrypted security policy returned by the security policy server based on the second preset interface function of the firmware of the embedded device.

7. A security policy updating method applied to a security policy server, comprising:
obtaining an encryption seed, the encryption seed being a random string output by a first preset interface function, the first preset interface function being an interface function of firmware of an embedded device; and
encrypting an updated security policy based on the encryption seed to obtain an encrypted security policy, wherein the encrypted security policy is received by a second preset interface function of the firmware and decrypted to obtain a decrypted security policy, and the decrypted security policy is enabled in the embedded device.

8. A security policy updating apparatus applied to an embedded device, comprising:
an encryption seed outputting module configured to output a random string as an encryption seed based on a first preset interface function of firmware of the embedded device; and
a security policy processing module configured to receive an encrypted security policy based on a second preset interface function of the firmware of the embedded device, decrypt the encrypted security policy to obtain a decrypted security policy, and enable the decrypted security policy; the encrypted security policy being obtained by encrypting an updated security policy based on the encryption seed.

9. An embedded device comprising a memory and a processor, wherein
the memory is configured to save a computer program; and
the processor is configured to execute the computer program to implement the security policy updating method according to any one of claims 1 to 6.

10. A computer-readable storage medium configured to save a computer program, wherein the computer program implements the security policy updating method according to any one of claims 1 to 7 when executed by a processor.
